# EUROPEAN PATENT APPLICATION

(11) **EP 4 383 066 A1**
(43) Date of publication of application: **12.06.2024**
(21) Application number: 22852137.3
(22) Date of filing: 01.08.2022
(51) Int. Cl.: G06F 9/312

(54) **DATA TRANSMISSION METHOD AND APPARATUS, AND DATA TRANSMISSION DEVICE AND STORAGE MEDIUM**

(30) Priority: 05.08.2021 CN 202110897763
(71) Applicant: Beijing CHJ Information Technology Co., Ltd., Beijing 101399 (CN)
(72) Inventor: LIU, Jiafu, Beijing 101399 (CN); XU, Yingchun, Beijing 101399 (CN)
(74) Representative: Maiwald GmbH
(86) International application number: PCT/CN2022/109540
(87) International publication number: WO 2023/011425

(57) **Abstract**

Provided are a data transmission method and apparatus, and a data transmission device and a storage medium. The data transmission method comprises: receiving a data transmission request of a data initiating device; according to the data transmission request, querying a first target physical address and a first target virtual address, wherein the first target physical address is a physical address at which data to be transmitted is stored in the data initiating device, and the first target virtual address is a virtual address at which said data is cached; reading said data from the first target physical address to the first target virtual address by using a direct memory access technology; and transmitting said data from the first target virtual address to a data receiving device by means of a preset data transmission network.

## Description

### CROSS-REFERENCE TO RELATED APPLICATION

This application is based on and claims priority to Chinese Patent Application No. 202110897763.0 filed on August 5, 2021, the entire content of which is incorporated herein by reference.

### TECHNICAL FIELD

The disclosure relates to the field of data transmission technologies, and specifically to a data transmission method, a data transmission apparatus, a data transmission device, a storage medium, a computer program product, and a computer program.

### BACKGROUND

Different devices on a vehicle may exchange data with each other when the vehicle is moving, to realize an autonomous vehicle control.

At present, resources of central processing units (CPUs) of participating devices may be occupied when exchanging data, which makes CPU loads of the participating devices too high, affects the autonomous vehicle control, and reduces a safety of an autonomous vehicle driving.

### SUMMARY

The disclosure provides a data transmission method, a data transmission apparatus, a data transmission device, a storage medium, a computer program product, and a computer program.

Some embodiments of the disclosure provide a data transmission method. The method includes: receiving a data transmission request from a data initiating device; querying a first target physical address and a first target virtual address according to the data transmission request, in which the first target physical address is a physical address in the data initiating device for storing data to be transmitted and the first target virtual address is a virtual address for buffering the data to be transmitted; reading the data to be transmitted from the first target physical address to the first target virtual address by using a direct memory access technology; and transmitting the data to be transmitted from the first target virtual address to a data receiving device through a preset data transmission network.

In one of the embodiments, the data transmission request carries a device program identifier; and querying the first target physical address and the first target virtual address according to the data transmission request includes: querying the first target physical address corresponding to the device program identifier; and querying the first target virtual address corresponding to the first target physical address according to a first address mapping relationship.

In one of the embodiments, reading the data to be transmitted from the first target physical address to the first target virtual address by using the direct memory access technology includes: in a case that a data type of the data to be transmitted is a target data type, reading the data to be transmitted from the first target physical address to the first target virtual address by using the direct memory access technology; in which the target data type is a data type to which data targeted by the direct memory access technology belong.

In one of the embodiments, transmitting the data to be transmitted from the first target virtual address to the data receiving device through the preset data transmission network includes: transmitting the data to be transmitted from the first target virtual address to a first transmission device through the preset data transmission network, in which the first transmission device is connected to the data receiving device and the first transmission device is configured to transmit the data to be transmitted to the data receiving device by using the direct memory access technology.

In one of the embodiments, transmitting the data to be transmitted from the first target virtual address to the first transmission device through the preset data transmission network includes: querying a second target virtual address corresponding to the first target virtual address according to a second address mapping relationship, in which the second target virtual address is a virtual address in the first transmission device for buffering the data to be transmitted; and transmitting the data to be transmitted from the first target virtual address to the second target virtual address through the preset data transmission network; in which the first transmission device is configured to transmit the data to be transmitted from the second target virtual address to a second target physical address corresponding to the second target virtual address by using the direct memory access technology and the second target physical address is a physical address in the data receiving device for storing the data to be transmitted.

In one of the embodiments, transmitting the data to be transmitted from the first target virtual address to the data receiving device through the preset data transmission network includes: transmitting the data to be transmitted from the first target virtual address to a second transmission device through the preset data transmission network, in which the second transmission device is configured to transmit the data to be transmitted to a first transmission device through the preset data transmission network, the first transmission device is connected to the data receiving device, and the first transmission device is configured to transmit the data to be transmitted to the receiving device data by using the direct memory access technology.

In one of the embodiments, transmitting the data to be transmitted from the first target virtual address to the second transmission device through the preset data transmission network includes: querying a third target virtual address corresponding to the first target virtual address according to a third address mapping relationship, wherein the third target virtual address is a virtual address in the second transmission device for buffering the data to be transmitted; and transmitting the data to be transmitted from the first target virtual address to the third target virtual address through the preset data transmission network; in which the second transmission device is configured to transmit the data to be transmitted from the third target virtual address to a second target virtual address corresponding to the third target virtual address through the preset data transmission network, the second target virtual address is a virtual address in the first transmission device for buffering the data to be transmitted, and the first transmission device is configured to transmit the data to be transmitted from the second target virtual address to a second target physical address corresponding to the second target virtual address by using the direct memory access technology, and the second target physical address is a physical address in the data receiving device for storing the data to be transmitted.

In one of the embodiments, the preset data transmission network includes a time-sensitive network.

In one of the embodiments, transmitting the data to be transmitted from the first target virtual address to the data receiving device through the preset data transmission network includes: adding the data to be transmitted to a transmission queue of the time-sensitive network, in which the transmission queue is configured to determine a first transmission order of the data to be transmitted according to a target transmission priority and a timestamp carried by the data to be transmitted, and transmit the data to be transmitted from the first target virtual address to the data receiving device according to the first transmission order, and the target transmission priority is a transmission priority to which a data type of the data to be transmitted belongs.

In one of the embodiments, transmitting the data to be transmitted from the first target virtual address to the data receiving device through the preset data transmission network includes: adding the data to be transmitted to a transmission queue of the time-sensitive network, in which the data transmission sequence is configured to determine a second transmission order of the data to be transmitted according to a received time stamp carried by the data to be transmitted, and transmit the data to be transmitted from the first target virtual address to the data receiving device according to the second transmission order.

In one of the embodiments, before receiving the data transmission request from the data initiation module, the method further includes: during a startup process, loading network configuration data corresponding to the preset data transmission network from an electrically erasable programmable read only memory.

Some embodiments of the disclosure also provide a data transmission apparatus. The apparatus includes: a request receiving module configured to receive a data transmission request from a data initiating device; an address querying module configured to query a first target physical address and a first target virtual address according to the data transmission request, in which the first target physical address is a physical address in the data initiating device for storing data to be transmitted and the first target virtual address is a virtual address for buffering the data to be transmitted; a data reading module configured to read the data to be transmitted from the first target physical address to the first target virtual address by using a direct memory access technology; and a data transmission module configured to transmit the data to be transmitted from the first target virtual address to a data receiving device through a preset data transmission network.

Some embodiments of the disclosure also provide a data transmission device. The device includes: one or more processors; and a storage means for storing one or more programs. When the one or more programs are executed by the one or more processors, the one or more processors perform the data transmission method provided by any of the foregoing embodiments.

Some embodiments of the disclosure also provide a computer-readable storage medium having stored therein a computer program. When the computer program is executed by a processor, the data transmission method provided by any of the foregoing embodiments is implemented.

Some embodiments of the disclosure further provide a computer program product. The computer program product includes a computer program, and when the computer program is executed by a processor, the data transmission method provided by any of the foregoing embodiments is implemented.

Some embodiments of the disclosure further provide a computer program. The computer program includes a computer program code, and when the computer program code runs on a computer, the computer is caused to execute the data transmission method provided by any of the foregoing embodiments.

Compared with the prior art, technical solutions provided by the embodiments of the disclosure have the following advantages.

With the data transmission method, the data transmission apparatus, the data transmission device, the storage medium, the computer program product, and the computer program in the embodiments of the disclosure, the first target physical address and the first target virtual address may be queried according to the data transmission request when receiving the data transmission request from the data initiating device. The data to be transmitted stored in the first target physical address in the data initiating device are buffered by using the direct memory access technology to the first target virtual address of the data to be transmitted. The data to be transmitted are transmitted from the first target virtual address to the data receiving device through the preset data transmission network. Therefore, the entire data transmission process from the data initiating device to the data receiving device may be realized without the participation of the CPU of the data initiating device, which may effectively reduce the CPU resource occupation on the data initiating device, thereby reducing the CPU load of the data initiating device, ensuring the reliability of the autonomous vehicle control, and improving the safety of the autonomous vehicle driving.

### BRIEF DESCRIPTION OF THE DRAWINGS

The accompanying drawings, which are incorporated in and constitute a part of this specification, illustrate embodiments consistent with the disclosure and, together with the specification, serve to explain principles of the disclosure.

To more clearly illustrate technical solutions in embodiments of the disclosure or in the prior art, the following will briefly introduce the accompanying drawings that need to be used in the description of the embodiments or the prior art. Obviously, for those skilled in the art, other drawings may also be obtained from these drawings without creative labor.
FIG. 1 is a schematic diagram of a vehicle network model according to some embodiments of the disclosure.
FIG. 2 is an architecture diagram of data transmission according to some embodiments of the disclosure.
FIG. 3 is another architecture diagram of data transmission according to some embodiments of the disclosure.
FIG. 4 is still another architecture diagram of data transmission according to some embodiments of the disclosure.
FIG. 5 is yet another architecture diagram of data transmission according to some embodiments of the disclosure.
FIG. 6 is a schematic flowchart of a data transmission method according to some embodiments of the disclosure.
FIG. 7 is a schematic flowchart of another data transmission method according to some embodiments of the disclosure.
FIG. 8 is a schematic block diagram of a data transmission apparatus according to some embodiments of the disclosure.
FIG. 9 is a schematic block diagram of a data transmission apparatus according to some embodiments of the disclosure.
FIG. 10 is a schematic block diagram of another data transmission device according to some embodiments of the disclosure.

### DETAILED DESCRIPTION

To more clearly understand the above objects, features, and advantages of the disclosure, the solutions of the disclosure will be further described below. It should be noted that, in the case of no conflict, embodiments of the disclosure and features in the embodiments may be combined with each other.

In the following description, many specific details are set forth to fully understand the disclosure but the disclosure may also be implemented in other ways than described herein; obviously, the embodiments in the description are only some of the embodiments of the disclosure and not all embodiments.

Different devices on a vehicle may exchange data with each other when the vehicle is moving, to realize an autonomous vehicle control.

In some embodiments of the disclosure, a vehicle network model includes zone controllers (ZCs) placed in various main zones of the vehicle body and using a ring (or annular) network connection to form a closed loop, so that data transmitted by any zone controller may be monitored by all other zone controllers on the loop. The vehicle network model also includes a central controller, which may be connected to at least one zone controller to realize data transmission with all zone controllers.

The zone controller may be used to receive and transmit vehicle operation information collected by sensor(s) in the corresponding zone and control actuator(s) in the corresponding zone according to control instruction(s). The central controller may be used to receive vehicle operation information transmitted by zone controller(s), generate corresponding control instruction(s) according to the vehicle operation information, and issue control instruction(s).

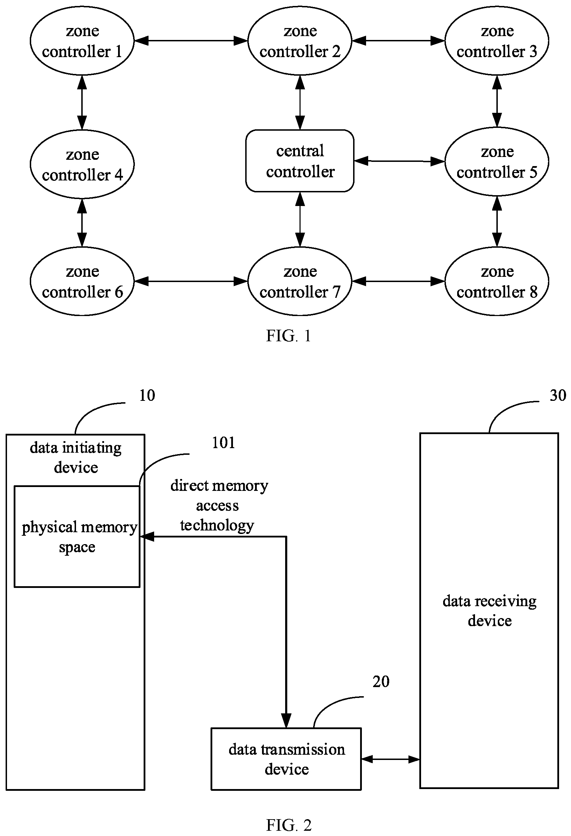

FIG. 1 illustrates a schematic diagram of a vehicle network model. As illustrated in FIG. 1, the vehicle network model includes a central controller and eight zone controllers. Eight zone controllers are connected to form a ring network. The zone controller 2, the zone controller 5, and the zone controller 7 are respectively directly connected with the central controller. Through the above-mentioned vehicle network model, data transmission may be performed between every two controllers through corresponding links.

Taking the zone controller 2 transmitting data to the central controller as an example, the zone controller 2 may directly transmit the data to the central controller through the data transmission link between the zone controller 2 and the central controller, so that the central controller may receive the data.

Taking the zone controller 1 transmitting data to the central controller as an example, the zone controller 1 may transmit the data to the central controller over the zone controller 2 through the shortest data transmission link with the central controller, so that the central control may receive the data.

Taking the zone controller 1 transmitting data to the zone controller 8 as an example, the zone controller 1 may transmit the data to the zone controller 8 over the zone controller 2, the zone controller 3, the zone controller 5 through the shortest data transmission link with the zone controller 8, so that the zone controller 8 receives the data.

Based on the above vehicle network model, embodiments of the disclosure provide a data transmission method, a data transmission apparatus, a data transmission device, a storage medium, a computer program product, and a computer program, which do not occupy CPU resources during data transmission.

The data transmission architecture, data transmission method, data transmission apparatus, data transmission device, and storage medium provided in the embodiments of the disclosure are described for example below with reference to FIGS. 2-10.

FIG. 2 illustrates an architecture diagram of data transmission provided in some embodiments of the disclosure.

As illustrated in FIG. 2, the architecture diagram includes a data initiating device 10, a data transmission device 20, and a data receiving device 30. The data transmission device 20 may be communicatively connected with the data initiating device 10 and the data receiving device 30 respectively. The data initiating device 10 may include a physical memory space 101.

In some embodiments of the disclosure, the data initiating device 10 may be a device that initiates a data transmission request. The data initiating device 10 may be the central controller or the zone controller in FIG. 1. Data to be transmitted may be stored in the first target physical address of the physical memory space 101 of the data initiating device 10.

In some embodiments of the disclosure, the data transmission device 20 may be installed in the data initiating device 10. For example, the data initiating device 10 may be a master device and the data transmission device 20 may be a slave device, or the data transmission device 20 may be a module in the data initiating device 10.

In other embodiments of the disclosure, the data transmission device 20 may be an external device of the data initiating device 10, that is, the data transmission device 20 and the data initiating device 10 may be two independent devices.

In some embodiments of the disclosure, the data transmission device 20 may be a network component. The first target virtual address of the data transmission device 20 may be the virtual address used to buffer the data to be transmitted.

In some embodiments, the data transmission device 20 may be a network component with a field programmable gate array (FPGA) as a core.

In other embodiments, the data transmission device 20 may be a network component with an advanced reduced instruction set computing (RISC) machine (ARM) as a core.

In other embodiments, the data transmission device 20 may be a network component with a reduced instruction set computer (RISC) as a core.

In some embodiments of the disclosure, the data receiving device 30 may be a device for receiving data. In the case where the data initiating device 10 is the central controller, the data receiving device 30 may be the zone controller in FIG. 1. In the case where the data initiating device 10 is the zone controller, the data receiving device 30 may be the central controller or zone controller in FIG. 1.

Based on the above architecture, when the data initiating device 10 initiates the data transmission request, the data transmission device 20 may receive the data transmission request, and respond to the data transmission request, query the first target physical address and the first target virtual address corresponding to the data to be transmitted according to the data transmission request, and use the direct memory access technology to directly read the data to be transmitted from the first target physical address to the first target virtual address, so as to transmit the data to be transmitted from the first target virtual address to the data receiving device 30 through the preset data transmission network. Thus, in the data transmission process, without the participation of the CPU of the data initiating device 10, the whole data transmission process from the data initiating device to the data receiving device may be realized, which may effectively reduce the CPU resource occupation on the data initiating device, thereby reducing the CPU load of the data initiating device, ensuring the reliability of the autonomous vehicle control, and improving the safety of the autonomous vehicle driving.

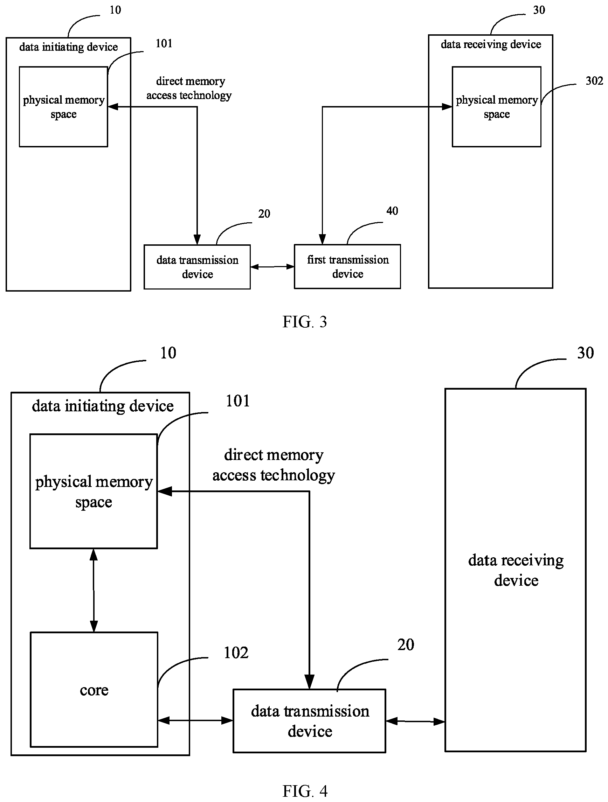

FIG. 3 illustrates another architecture diagram of data transmission provided in some embodiments of the disclosure.

As illustrated in FIG. 3, the architecture is basically the same as that illustrated in FIG. 2 but the only difference is on the basis of FIG. 2, a first transmission device 40 is added and the data receiving device 30 includes a physical memory space 301.

The first transmission device 40 may respectively establish a communication connection with the data transmission device 20 and the data receiving device 30 and perform information exchange. The second target virtual address of the first transmission device 40 may be the virtual address used to buffer the data to be transmitted.

In some embodiments of the disclosure, the first transmission device 40 may be a network component.

In some embodiments, the first transmission device 40 may be a network component with an FPGA as a core.

In other embodiments, the first transmission device 40 is a network component with an ARM as a core.

In other embodiments, the first transmission device 40 may be a network component with an RISC as a core.

In some embodiments of the disclosure, the second target physical address of the physical memory space 301 of the data receiving device 30 may receive the data to be transmitted.

Based on the above architecture, after the data transmission device 20 reads the data to be transmitted from the first target physical address to the first target virtual address by using the direct memory access technology, it queries the second target virtual address corresponding to the first target virtual address according to the second address mapping relationship, transmit the data to be transmitted from the first target virtual address to the second target virtual address in the first transmission device 40 through the preset data transmission network. After the first transmission device 40 receives the data to be transmitted, it queries the second target physical address corresponding to the second target virtual address according to the pre-stored address mapping relationship, so that the first transmission device 40 may use the direct memory access technology to transmit the data to be transmitted from the second target virtual address to the second target physical address corresponding to the second target virtual address.

FIG. 4 illustrates another architecture diagram of data transmission provided in some embodiments of the disclosure.

As illustrated in FIG. 4, the architecture is basically the same as that illustrated in FIG. 2 but the only difference is on the basis of FIG. 2, the data initiating device 10 further includes a kernel 102. The kernel 102 respectively establishes a communication connection with the physical memory space 101 and the data transmission device 20 and performs information exchange. The CPU of the data initiating device 10 may include the kernel 102.

In some embodiments of the disclosure, the data type of the data to be transmitted may be a target data type or a non-target data type. The target data type may be the data type to which the data targeted by the direct memory access technology belong. The non-target data type may be the data type to which the data targeted by other protocols belong. Other protocols may include: controller area network, full-duplex communication protocol, etc., which are not limited herein.

Based on the above architecture, after the data transmission device 20 receives the data transmission request, it may respond to the data transmission request, query the first target physical address and the first target virtual address corresponding to the data to be transmitted according to the data transmission request, and determine whether the data type corresponding to the data to be transmitted is the target data type. If the data type corresponding to the data to be transmitted is the target data type, the data transmission device 20 may use the direct memory access technology to transmit the data to be transmitted of the target data type from the first target physical to the first target virtual address directly; and if the data type corresponding to the data to be transmitted is the non-target data type, the data transmission device 20 may receive the data to be transmitted from the kernel of the data initiating device by means of a full-duplex communication network or a controller area network (CAN) bus, or the like and buffer the data to be transmitted to the first target virtual address.

Therefore, during the data transmission process, different data transmission modes may be adopted for different data types of data to be transmitted, so that the data transmission process may be adapted to various scenarios, and the flexibility of the data transmission process is improved.

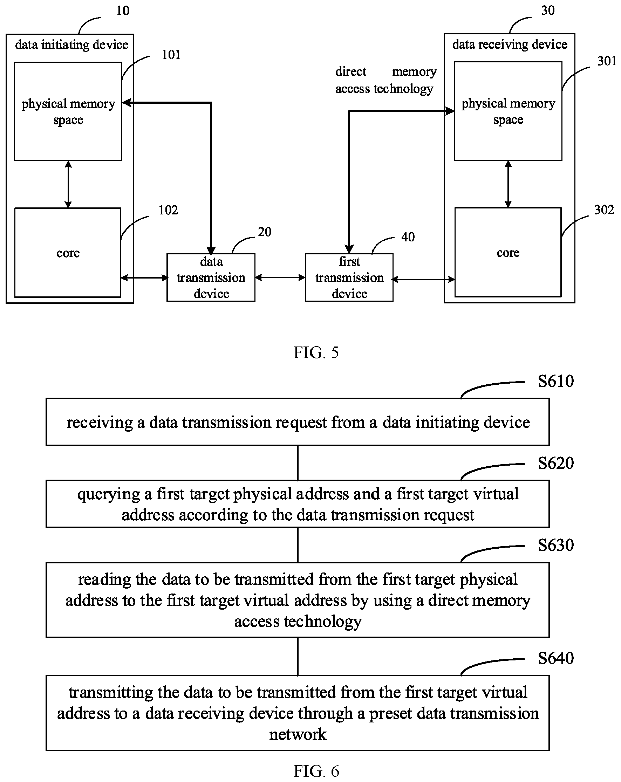

FIG. 5 illustrates another architecture diagram of data transmission provided in some embodiments of the disclosure.

As illustrated in FIG. 5, the architecture is basically the same as that illustrated in FIG. 4 but the only difference is on the basis of FIG. 4, the CPU of the data receiving device 30 may also include a kernel 302.

Based on the above architecture, after the data transmission device 20 receives the data transmission request, it may respond to the data transmission request, query the first target physical address and the first target virtual address corresponding to the data to be transmitted according to the data transmission request, and determine whether the data type corresponding to the data to be transmitted is the target data type. If the data type corresponding to the data to be transmitted is the target data type, the data transmission device 20 may use the direct memory access technology to transmit the data to be transmitted of the target data type from the first target physical address directly to the first target virtual address; and if the data type corresponding to the data to be transmitted is the non-target data type, the data transmission device 20 may receive the data transmitted by the kernel of the data initiating device through a full-duplex communication network or a CAN bus and buffer the data to be transmitted in the first target virtual address. Further, the data transmission device 20 may transmit the data to be transmitted from the first target virtual address to the second target virtual address through the preset data transmission network, so that the first transmission device 40 may determine whether the data type corresponding to the data to be transmitted is the target data type. If the data type corresponding to the data to be transmitted is the target data type, the first transmission device 40 may use the direct memory access technology to transmit the data to be transmitted from the second target virtual address to the second target virtual address corresponding to the second target physical address; and if the data type corresponding to the data to be transmitted is the non-target data type, the first transmission device 40 may transmit the data to be transmitted to the data receiving device 30 through the kernel 302 of the data receiving device 30.

Based on the above architectures, the data transmission method provided in the embodiments of the disclosure will be described below with reference to FIGS. 6-8. In the embodiments of the disclosure, the data transmission method may be executed by a data transmission device. The data transmission device may be the data transmission device 20 in FIGS. 2-5.

In some embodiments of the disclosure, the data transmission device may establish a communication connection with the data initiating device and perform information exchange.

In some embodiments of the disclosure, the data transmission device may be installed in the data initiation device. Therefore, the data transmission device may be a master device and the data transmission device may be a slave device, or the data transmission device may be one module of the data initiation devices.

In other embodiments of the disclosure, the data transmission device may be an external device of the data initiating device, that is, the data transmission device and the data initiating device may be two independent devices.

In some embodiments of the disclosure, the data transmission device may be a network component.

In some embodiments, the data transmission device may be a network component with an FPGA as a core.

In other embodiments, the data transmission device may be a network component with an ARM as a core.

In other embodiments, the data transmission device may be a network component with an RISC as a core.

FIG. 6 illustrates a schematic flowchart of a data transmission method provided in some embodiments of the disclosure.

As illustrated in FIG. 6, the data transmission method may include the following steps S610-S640.

S610, a data transmission request from a data initiating device is received.

In some embodiments of the disclosure, the data initiating device may be a device for initiating data transmission. In some embodiments of the disclosure, the data initiating device may be the central controller or the zone controller in FIG. 1.

In some embodiments of the disclosure, the data transmission request may be a request for triggering to transmit data to be transmitted. The data to be transmitted may be data required to be transmitted by the program of the target device that generates the data transmission request.

In detail, when the data initiating device needs to transmit the data to be transmitted to the data transmission device, it may transmit the data transmission request to the data transmission device, so that the data transmission device receives the data transmission request and transmits the data to be transmitted in response to the data transmission request.

S620, a first target physical address and a first target virtual address are queried according to the data transmission request.

In some embodiments of the disclosure, the first target physical address may store the data to be transmitted. The physical address may be an address in the physical memory space of the data initiating device.

In some embodiments of the disclosure, the first target virtual address may be a virtual address for buffering the data to be transmitted. The virtual address may be an address in a virtual memory space in the data transmission device.

In detail, after receiving the data transmission request, in response to the data transmission request, the data transmission device may query the first target physical address and the first target virtual address associated with the data to be transmitted.

In some embodiments of the disclosure, the data transmission request may carry a device program identifier.

Correspondingly, S620 may specifically include querying the first target physical address corresponding to the device program identifier; and querying the first target virtual address corresponding to the first target physical address according to a first address mapping relationship.

In detail, after the data transmission device receives the data transmission request, it may respond to the data transmission request, analyze the data transmission request, obtain the device program identifier carried in the data transmission request, query the first target physical address corresponding to the device program identifier, and query, according to the first address mapping relationship, the first target virtual address corresponding to the first target physical address.

In some embodiments of the disclosure, the device program identifier may be an identifier number (Identity Document, ID) of the target device program corresponding to the data transmission request. The target device program corresponding to the data transmission request may correspond to a unique physical address.

The device program may be a program related to automatic driving. For example, the device program may be a program in the zone controller for receiving and transmitting vehicle operation information collected by sensor(s) in the corresponding zone and controlling actuator(s) in the corresponding zone based on control instruction(s). For another example, the device program may be a program in the central controller for receiving vehicle operation information transmitted by zone controller(s), generating corresponding control instruction(s) based on the vehicle operation information, and issuing control instruction(s).

In some embodiments of the disclosure, the first address mapping relationship may be an address mapping relationship pre-stored in the data receiving device.

In some embodiments of the disclosure, before S610, the data receiving device may pre-establish the first address mapping relationship between the physical address in the data initiating device and the virtual address in the data transmission device based on the instruction channel. In some embodiments of the disclosure, the instruction channel may include an instruction set for establishing an address mapping relationship between a physical address pointed to by a device program interface of each device program and a virtual address of the data transmission device.

In other embodiments of the disclosure, the data transmission request may carry a device program identifier.

Correspondingly, S620 may specifically include: querying the first target physical address and the first target virtual address stored in association with the device program identifier.

In detail, after the data transmission device receives the data transmission request, it may respond to the data transmission request, analyze the data transmission request, obtain the device program identifier carried in the data transmission request, and query the first target physical address and the first target virtual address stored in association with the device program identifier.

In some embodiments of the disclosure, before S610, the data receiving device may predetermine the virtual address in the data transmission device corresponding to the physical address in the data initiating device based on the instruction channel, and assign each physical address, the device program identifier to which each physical address belongs, and the virtual address corresponding to each physical address.

S630, the data to be transmitted are read from the first target physical address to the first target virtual address by using a direct memory access technology.

In some embodiments of the disclosure, the data initiating device may be configured with a direct memory access technology interface, so that the data transmission device may directly use the direct memory access technology through the direct memory access technology interface to read the data to be transmitted that the data initiating device needs to transmit.

Taking the data initiating device as the central controller in FIG. 1 as an example, the ARM platform may be used as the central controller, and the direct memory access technology interface is configured under the ARM platform, so that the central controller configures a direct memory access module under the ARM platform, and the data transmission device may directly obtain the data to be transmitted required by the ARM platform.

In some embodiments of the disclosure, the direct memory access technology may be a remote direct memory access (RDMA) technology.

In other embodiments of the disclosure, the direct memory access technology may be an ultra-remote direct memory access (UDMA) technology.

In detail, after the data transmission device has queried the first target physical address and the first target virtual address, it may use the direct memory access technology, the direct memory access technology corresponding to the direct memory access protocol in an InfiniBand (IB) protocol stack generated by the data initiating device based on an IB technology, directly reads the data to be transmitted from the first target physical address to the first target virtual address without the participation of the CPU of the data initiating device. The IB protocol stack may be a protocol combination generated based on the IB technology.

S640, the data to be transmitted are transmitted from the first target virtual address to a data receiving device through a preset data transmission network.

In embodiments of the disclosure, the preset data transmission network may be any network preset for data transmission with external devices. In some embodiments of the disclosure, the preset data transmission network may be a CAN or a time-sensitive networking (TSN), which is not limited herein.

In embodiments of the disclosure, the data receiving device may be a device that receives data. In the case that the data transmission device is the central controller in FIG. 1, the data receiving device may be the zone controller in FIG. 1. In the case that the data transmission device is the zone controller in FIG. 1, the data receiving device may be the central controller or the zone controller in FIG. 1.

In detail, after the data transmission device reads the data to be transmitted from the first target physical address to the first target virtual address, it may use the preset data transmission network to transmit the data to be transmitted through the network transmission protocol corresponding to the preset data transmission network from the first target virtual address to the data receiving device.

Therefore, in some embodiments of the disclosure, the data transmission device may transmit the data to be transmitted buffered in the first target virtual address to the data receiving device, so that the data receiving device may receive the data to be transmitted and complete the transmission of the data to be transmitted.

In some embodiments of the disclosure, when receiving the data transmission request from the data initiating device, the first target physical address and the first target virtual address may be queried according to the data transmission request, and the direct memory access technology may be used to buffer the data to be transmitted stored in the first target physical address in the data initiating device to the first target virtual address of the data to be transmitted, and then the data to be transmitted is transmitted from the first target virtual address to the data receiving device through the preset data transmission network. Therefore, the entire data transmission process from the data initiating device to the data receiving device may be realized without the participation of the CPU of the data initiating device, which may effectively reduce the CPU resource occupation on the data initiating device, thereby reducing the CPU load of the data initiating device, ensuring the reliability of the autonomous vehicle control, and improving the safety of the autonomous vehicle driving.

In another implementation manner of the disclosure, in order to adapt the data transmission process to various scenarios, the data transmission device may determine the transmission mode of the data to be transmitted according to the data type of the data to be transmitted.

In some embodiments of the disclosure, after the data transmission device receives the data transmission request, in response to the data transmission request, the first target physical address and the first target virtual address corresponding to the data to be transmitted are queried according to the data transmission request. It determines whether the data type corresponding to the data to be transmitted is the target data type according to the transmission request, and different data transmission modes may be adopted for the data to be transmitted of different data types.

In some embodiments of the disclosure, S630 may include:
in a case that a data type of the data to be transmitted is a target data type, reading the data to be transmitted from the first target physical address to the first target virtual address by using the direct memory access technology.

The target data type is a data type to which data targeted by the direct memory access technology belong.

Further, the data type targeted by the direct memory access technology may be a data type that requires high real-time performance. In some embodiments of the disclosure, the data of the target data type may include: vehicle braking data, vehicle operation data, etc., which are not limited herein.

In some embodiments of the disclosure, the data transmission device may preconfigure the target data type corresponding to the direct memory access technology.

In detail, after the data transmission device queries the first target physical address and the first target virtual address, it may determine whether the data type corresponding to the data to be transmitted is the target data type according to the data transmission request. If the data type corresponding to the data to be transmitted is the target data type, it may use the direct memory access technology to read the data to be transmitted from the first target physical address to the first target virtual address through the direct memory access technology corresponding to the direct memory access protocol in the IB protocol stack of the data initiator address, without the involvement of the CPU of the data initiating device.

Continuing to refer to the architecture diagram of data transmission in FIG. 4, after the data transmission device 20 queries the first target physical address and the first target virtual address, it may determine the data type corresponding to the data to be transmitted according to the data type identifier carried by the data to be transmitted. If the data type corresponding to the data to be transmitted is the target data type, the data transmission device 20 may use the direct memory access technology, the direct memory access technology corresponding the direct memory access protocol in the IB protocol stack of the physical memory space 101 of the data initiating device, to read the data to be transmitted from the first target physical address to the first target virtual address without the participation of the kernel 102 of the data initiating device, that is, without the participation of the CPU of the data initiating device.

In other embodiments of the disclosure, after S620, the data transmission method further includes:
in a case that the data type of the data to be transmitted is a non-target data type, receiving the data to be transmitted of the non-target data type from the kernel of the data initiating device; and
buffering the data to be transmitted of the non-target data type to the first target virtual address.

The non-target data type is not the data type to which the data targeted by the direct memory access technology belong.

In some embodiments of the disclosure, when the data type of the data to be transmitted is the non-target data type, the data initiating device may transmit the data to be transmitted of the non-target data type to the data transmission device through the kernel of the data initiating device. The kernel of the data initiating device may be the kernel 102 in FIG. 4.

In detail, after the data transmission device queries the first target physical address and the first target virtual address, it may determine whether the data type corresponding to the data to be transmitted includes the non-target data type according to the data transmission request. If the data type corresponding to the data to be transmitted is the non-target data type, the data to be transmitted of the non-target data type from the kernel of the data initiating device are received through the full-duplex communication network or CAN bus, that is, the data to be transmitted of the non-target data type may be transmitted by the physical memory space of the data initiating device to the data transmission device through the kernel, which requires the participation of the CPU of the data initiating device.

Continuing to refer to the architecture diagram of data transmission in FIG. 4, after the data transmission device 20 queries the first target physical address and the first target virtual address, it may determine the corresponding data type of the data to be transmitted according to the data type identifier carried by the data to be transmitted. If the data type corresponding to the data to be transmitted is the non-target data type, the physical memory space 101 transmits the data to be transmitted of the non-target data type to the kernel 102, so that the data transmission device 20 receives the data to be transmitted of the non-target data from the kernel 102 of the initiating device 10 through a full-duplex communication network or a CAN bus. This process requires the participation of the kernel 102 of the data initiating device, that is, the participation of the CPU of the data initiating device.

In some embodiments of the disclosure, the kernel 102 may be constructed in a Linux system. In some embodiments of the disclosure, the kernel 102 may include a Linux kernel, and the CPU may include a Linux kernel and a kernel driver.

The Linux kernel may be used by the physical memory space 101 by providing a unified driver operation interface. The Linux kernel may be the core program of the Linux system, which may complete functions such as task scheduling, memory management, and input and output device management. The kernel driver may be an intermediate layer that realizes hardware control under the unified interface of the physical memory space 101, and may enable the Linux system to effectively manage other hardware of the data initiating device 10.

Therefore, in the embodiments of the disclosure, a corresponding data transmission mode may be adopted according to the data type of the data to be transmitted, so that the data transmission process may be adapted to various scenarios and the flexibility of the data transmission process is improved.

In yet other embodiments of the disclosure, to reduce the participation of the CPU of the data receiving device in the data transmission process, the data transmission device may transmit the data to be transmitted from the first target virtual address to the first transmission device through the preset data transmission network. The first transmission device may use the direct memory access technology to directly transmit the data to be transmitted to the data receiving device. The above data transmission process does not require the CPU of the data receiving device to participate in the data transmission process, reducing the CPU load of the data receiving device.

In some embodiments of the disclosure, S640 may include:
transmitting the data to be transmitted from the first target virtual address to a first transmission device through the preset data transmission network, in which the first transmission device is connected to the data receiving device and the first transmission device is configured to transmit the data to be transmitted to the data receiving device by using the direct memory access technology.

In some embodiments of the disclosure, the first transmission device may be a device directly connected to both the data receiving device and the data transmission device.

In some embodiments, the first transmission device may be a network component with an FPGA as a core.

In other embodiments, the first transmission device may be a network component with an ARM as a core.

In other embodiments, the first transmission device may be a network component with an RISC as a core.

In detail, after the data transmission device reads the data to be transmitted from the first target physical address to the first target virtual address, it may use the preset data transmission network to transmit the data to be transmitted from the first target virtual address to the first transmission device through the network transmission protocol corresponding to the preset data transmission network. The first transmission device uses the direct memory access technology, through the direct memory access technology corresponding to the direct memory access protocol in the IB protocol stack of the data receiving device, to transmit the data to be transmitted to the data receiving device without the CPU participation of the data receiving device.

In some embodiments, S640 may include:
querying a second target virtual address corresponding to the first target virtual address according to a second address mapping relationship, in which the second target virtual address is a virtual address in the first transmission device for buffering the data to be transmitted; and
transmitting the data to be transmitted from the first target virtual address to the second target virtual address through the preset data transmission network.

The first transmission device is configured to transmit the data to be transmitted from the second target virtual address to a second target physical address corresponding to the second target virtual address by using the direct memory access technology and the second target physical address is a physical address in the data receiving device for storing the data to be transmitted.

In some embodiments of the disclosure, the second address mapping relationship may be an address mapping relationship pre-stored in the first transmission device.

In some embodiments of the disclosure, the second target virtual address may be a virtual address for buffering the data to be transmitted. The target virtual address may be an address in the virtual memory space in the first transmission device.

In some embodiments of the disclosure, the second target physical address may receive the data to be transmitted. The physical address may be an address of a physical memory space in the data receiving device.

In some embodiments of the disclosure, before S610, the data receiving device may pre-establish the second address mapping relationship between the virtual address in the data transmission device and the virtual address in the first transmission device based on the instruction channel. In some embodiments of the disclosure, the instruction channel may include an instruction set for establishing an address mapping relationship between the physical memory space pointed to by the device program interface of each device program and the virtual address of the data transmission device.

In detail, after the data transmission device reads the data to be transmitted from the first target physical address to the first target virtual address, it queries the second target virtual address corresponding to the first target virtual address based on the second address mapping relationship, and uses the preset data transmission network to transmit the data to be transmitted from the first target virtual address to the second target virtual address in the first transmission device through the network transmission protocol corresponding to the preset data transmission network. When the first transmission device receives the data to be transmitted, the second target physical address corresponding to the second target virtual address may be queried according to the pre-stored address mapping relationship, so that the first transmission device may use the direct memory access technology to transmit the data to be transmitted from the second target virtual address to the second target virtual address. The second target physical address corresponding to the second target virtual address does not require the participation of the CPU of the data receiving device.

Continuing to refer to the architecture diagram of data transmission in FIG. 3, after the data transmission device 20 reads the data to be transmitted from the first target physical address to the first target virtual address, the second target virtual address corresponding to the first target virtual address may be queried according to the second address mapping relationship. The data to be transmitted may be transmitted from the first target virtual address to the second target virtual addresses of the first transmission device 40 through the preset data transmission network according to the preset data transmission network protocol. After the first transmission device 40 receives the data to be transmitted, it may query the second target physical address corresponding to the second target virtual address according to the pre-stored address mapping relationship, and the first transmission device 40 may use the direct memory access technology, through the direct memory access technology corresponding to the direct memory access protocol in the IB protocol stack of the physical memory space 301 of the data receiving device 30, to transmit the data to be transmitted directly to the physical memory space 301 of the data receiving device 30 from the second target virtual address 30, that is, the first transmission device may query the second target physical address corresponding to the second target virtual address according to the pre-stored address mapping relationship, and transmit the data to be transmitted from the first target virtual address to the second target physical address corresponding to the target virtual address, and does not require the participation of the core 302 of the data receiving device 30, that is, the CPU of the data receiving device does not need to participate.

In some embodiments of the disclosure, after the first transmission device receives the data to be transmitted, it may determine whether the data type corresponding to the data to be transmitted is the target data type. If the data type corresponding to the data to be transmitted is the target data type, the first transmission device may use the direct memory access technology to transmit the data to be transmitted from the second target virtual address to the second target physical address corresponding to the second target virtual address; and if the data type corresponding to the data to be transmitted is the non-target data type, the first transmission device may transmit the data to be transmitted to the data receiving device through the kernel of the data receiving device.

Therefore, in some embodiments of the disclosure, the data transmission device transmits the data to be transmitted from the first virtual address to the second target virtual address in the first transmission device, so that the first transmission device may use the direct memory access technology to transmit directly the data to be transmitted from the second target virtual address to the second target physical address corresponding to the first target virtual address. This data transmission process does not require the CPU of the data receiving device to participate in the data transmission process. Therefore, the CPU of the data initiating device and the CPU of the data receiving device do not need to participate in the data transmission process, reducing the load of the CPU of the data initiating device and the CPU of the data receiving device.

In other embodiments of the disclosure, S640 may include:
transmitting the data to be transmitted from the first target virtual address to a second transmission device through the preset data transmission network, in which the second transmission device is configured to transmit the data to be transmitted to a first transmission device through the preset data transmission network, the first transmission device is connected to the data receiving device, and the first transmission device is configured to transmit the data to be transmitted to the receiving device data by using the direct memory access technology.

In some embodiments of the disclosure, the second transmission device may be a device directly connected to both the data receiving device and the first transmission device.

In detail, after the data transmission device reads the data to be transmitted from the first target physical address to the first target virtual address, it may use the preset data transmission network to transmit the data to be transmitted through the network transmission protocol corresponding to the preset data transmission network from the first target virtual address to the second transmission device. The second transmission device determines the data receiving device of the data to be transmitted according to the data recipient identifier carried by the data to be transmitted. If the data receiving device is the controller to which the second transmission device belongs, the second transmission device may use the direct memory access technology to transmit the data to be transmitted to the controller. If the data receiving device is the controller to which the first transmission device belongs, where the first transmission device is connected to the second transmission device, the transmission device may use the preset data transmission network to transmit the data to be transmitted to the first transmission device connected to the second transmission device through the network transmission protocol corresponding to the preset data transmission network, so that the first transmission device may use the direct memory access technology, the direct memory access technology corresponding to the direct memory access protocol in the IB protocol stack of the data initiating device, to transmit the data to be transmitted to the data receiving device. If the data receiving device is not the controller to which the next second transmission device connected to the second transmission device belongs, the second transmission device may use the preset data transmission network and use the network transmission protocol corresponding to the preset data transmission network, to transmit the data to be transmitted to the next second transmission device, and the next second transmission device may continue to perform the above steps until the data to be transmitted are transmitted to the first transmission device, so that the first transmission device may use the direct memory access technology, the direct memory access technology corresponding to the direct memory access protocol in the IB protocol stack of the data initiating device, to transmit the data to be transmitted to the data receiving device.

In some embodiments, S640 may include:
querying a third target virtual address corresponding to the first target virtual address according to a third address mapping relationship, in which the third target virtual address is a virtual address in the second transmission device for buffering the data to be transmitted; and
transmitting the data to be transmitted from the first target virtual address to the third target virtual address through the preset data transmission network.

The second transmission device is configured to transmit the data to be transmitted from the third target virtual address to a second target virtual address corresponding to the third target virtual address through the preset data transmission network, the second target virtual address is a virtual address in the first transmission device for buffering the data to be transmitted, and the first transmission device is configured to transmit the data to be transmitted from the second target virtual address to a second target physical address corresponding to the second target virtual address by using the direct memory access technology, and the second target physical address is a physical address in the data receiving device for storing the data to be transmitted.

In some embodiments of the disclosure, the third address mapping relationship may be an address mapping relationship pre-stored in the second transmission device.

In some embodiments of the disclosure, the third target virtual address may be a virtual address for buffering the data to be transmitted. The third target virtual address may be an address in the virtual memory space in the second transmission device.

In some embodiments of the disclosure, the second target physical address may receive the data to be transmitted. The physical address may be an address of the physical memory space in the data receiving device.

In some embodiments of the disclosure, before S610, the data receiving device may pre-establish the third address mapping relationship between the virtual address in the data transmission device and the virtual address in the second transmission device based on the instruction channel. In some embodiments of the disclosure, the instruction channel may include an instruction set for establishing the address mapping relationship between the physical memory space pointed to by the device program interface of each device program and the virtual address of the data transmission device.

In detail, before the second transmission device transmit the data to be transmitted to the first transmission device, it may first query the third target virtual address corresponding to the first target virtual address based on the third address mapping relationship, so as to transmit the data to be transmitted from the first target virtual address to the third target virtual address through the preset data transmission network. After the first transmission device receives the data to be transmitted, it may query the second target physical address corresponding to the second target virtual address based on the pre-stored address mapping relationship, and use the direct memory access technology to transmit the data to be transmitted from the second target virtual address to the second target physical address.

In some embodiments of the disclosure, after the first transmission device receives the data to be transmitted, it may determine whether the data type corresponding to the data to be transmitted is the target data type. If the data type corresponding to the data to be transmitted is the target data type, the first transmission device may use the direct memory access technology to transmit the data to be transmitted from the second target virtual address to the second target physical address corresponding to the second target virtual address. If the data type corresponding to the data to be transmitted is the non-target data type, the first transmission device may transmit the data to be transmitted to the data receiving device through the kernel of the data receiving device.

Therefore, in some embodiments of the disclosure, after the data transmission device reads the data to be transmitted from the first target physical address to the first target virtual address, it may query the third target virtual address corresponding to the first target virtual address according to the third address mapping relationship, and use the preset data transmission network to transmit the data to be transmitted from the first target virtual address to the third target virtual address in the second transmission device, so that the second transmission device may use the preset data transmission network, by using the network transmission protocol corresponding to the preset data transmission network, to transmit the data to be transmitted from the third target virtual address to the second target virtual address corresponding to the third target virtual address in the first transmission device. So that the first transmission device uses the direct memory access technology, through the direct memory access technology corresponding to the direct memory access protocol in the IB protocol stack of the physical memory space of the data receiving device, to transmit the data to be transmitted from the second target virtual address to the second target physical address corresponding to the second target virtual address. The data transmission process may realize the indirect transmission of the data to be transmitted through the second transmission device and may be applicable to the data transmission between indirectly connected controllers.

In conclusion, in some embodiments of the disclosure, the data transmission device may directly transmit the data to be transmitted from the first target virtual address to the first transmission device through the preset data transmission network, so as to realize the direct transmission of the data to be transmitted through the first transmission device and to be applicable to data transmission between directly connected controllers; or the data to be transmitted is first transmitted from the first target virtual address to the second transmission device, and then transmitted by the second transmission device to the first transmission device, and the first transmission device further transmits the data to be transmitted to the data receiving device through the first transmission device, realizing the indirect transmission of the data to be transmitted through the second transmission device, and may be applicable to data transmission between indirectly connected controllers.

In still another implementation manner of the disclosure, to improve the transmission efficiency of the data to be transmitted from the first target virtual address to the data receiving device, the preset data transmission network may include a time-sensitive network.

In some embodiments of the disclosure, the time-sensitive network may define a time-sensitive mechanism of Ethernet data transmission, which adds certainty and reliability to standard Ethernet, so as to ensure that Ethernet may provide a stable and consistent service level for the data transmission.

In some embodiments of the disclosure, S640 may include:
adding the data to be transmitted to a transmission queue of the time-sensitive network, in which the transmission queue is configured to determine a first transmission order of the data to be transmitted according to a target transmission priority and a timestamp carried by the data to be transmitted and transmit the data to be transmitted from the first target virtual address to the data receiving device according to the first transmission order, and the target transmission priority is a transmission priority to which a data type of the data to be transmitted belongs.

In some embodiments of the disclosure, the transmission queue of the time-sensitive network may be a queue for transmitting data.

In some embodiments of the disclosure, the first transmission order may be a queue order for transmitting the data to be transmitted.

In some embodiments, when the data are transmitted through the time-sensitive network, the time stamp may be configured for the data to be transmitted according to a time stamp configuration protocol, that is, the time stamp carried by the data to be transmitted may be determined.

In some embodiments of the disclosure, before S610, the method may further include:
determining a data type of each data of the data initiating device; and
configuring a transmission priority of each data type, and determine a priority identifier corresponding to each data type.

In detail, the data transmission device may determine the data type of each data of the data initiating device according to the preset type classification standard, and generate a priority code point (PCP) corresponding to each data type according to the priority standard of the time-sensitive network. The priority code point may include a 3-digit code. The priority code point is used to represent the transmission priority, and configure a corresponding priority identifier for each transmission priority.

Therefore, before the data transmission device adds the data to be transmitted to the transmission queue, it may query the target priority of the data type of the data to be transmitted, and add the target priority identifier to the data to be transmitted.

Further, after the data receiving device adds the target priority identifier to the data to be transmitted, it may determine the target priority corresponding to the data to be transmitted according to the target priority identifier, and add the data to be transmitted to the transmission queue of the time-sensitive network. The transmission module to which the transmission queue in the data receiving device belongs updates the queue order of the transmission queue according to the target priority corresponding to the data to be transmitted and the time stamp carried by the data to be transmitted, so that the data to be transmitted with a smaller time stamp carried by the data to be transmitted is ranked at the front of the queue first in the transmission queue. If the time stamps carried by the data to be transmitted are the same, the data to be transmitted with the high priority will be placed at the front of the transmission queue, and the queue order of the updated transmission queue will be used as the first transmission order of the first data to be transmitted, so that the transmission module to which the transmission queue belongs transmits the data to be transmitted from the first target virtual address to the data receiving device according to the first transmission order.

In other embodiments, when the data are transmitted through the time-sensitive network, no time stamp may be configured. Therefore, after the data receiving device adds the target priority identifier to the data to be transmitted, it may determine the target priority corresponding to the data to be transmitted according to the target priority identifier, and add the data to be transmitted to the transmission queue of the time-sensitive network. The transmission module to which the queue in the data receiving device belongs updates the queue order of the transmission queue according to the target priority corresponding to the data to be transmitted, so that the data to be transmitted with the high priority transmission priority is arranged at the front of the transmission queue, and the updated queue order of the transmission queue is used as the first transmission order of the first transmission data of the transmission data, so that the transmission module to which the transmission queue belongs transmits the data to be transmitted from the first target virtual address to the data receiving device according to the first transmission order.

Therefore, in embodiments of the disclosure, the queue order of the transmission queue may be updated according to the target priority corresponding to the data to be transmitted, so that the data to be transmitted with the higher target priority is transmitted first, or the queue order of the transmission queue may be updated according to the target priority corresponding to the data to be transmitted and the time stamp carried by the data to be transmitted, so that the data to be transmitted with the small time stamp carried by the data to be transmitted and the high target priority are transmitted first, thereby improving the transmission efficiency of the data to be transmitted.

In other embodiments of the disclosure, S640 may include:
adding the data to be transmitted to a transmission queue of the time-sensitive network, in which the data transmission sequence is configured to determine a second transmission order of the data to be transmitted according to a received time stamp carried by the data to be transmitted and transmit the data to be transmitted from the first target virtual address to the data receiving device according to the second transmission order.

In some embodiments of the disclosure, the second transmission order may be a queue order for transmitting data to be transmitted.

In some embodiments of the disclosure, when the data are transmitted through the time-sensitive network, the time stamp may be configured for the data to be transmitted according to the time stamp configuration protocol, that is, the time stamp carried by the data to be transmitted may be determined.

In detail, after the data receiving device determines the time stamp carried by the data to be transmitted, it may update the queue order of the transmission queue according to the time stamp of the data to be transmitted, so that the data to be transmitted with the smaller timestamp carried by the data to be transmitted are arranged at the front of the transmission queue. The queue order of the updated transmission queue is used as the first transmission order of the second transmission data of the data to be transmitted, and then the transmission module to which the transmission queue belongs to transmits the data to be transmitted from the first target virtual address according to the first transmission order to the data receiving device.

Therefore, in some embodiments of the disclosure, the queue order of the transmission queue may be updated according to the time stamp carried by the data to be transmitted, so that the data to be transmitted with the small time stamp carried by the data to be transmitted are transmitted first, thereby improving the transmission efficiency of the data to be transmitted.

In some embodiments of the disclosure, the data transmission device 20 uses the direct memory access technology to read the data to be transmitted from the first target physical address to the first target virtual address, and transmit the data to be transmitted from the first target virtual address to the second target virtual address in the first transmission device by the TSN, so that the first transmission device may use the direct memory access technology, through the direct memory access technology corresponding to the direct memory access protocol in the IB protocol stack of the data receiving device, to directly transmit the data to be transmitted from the second target virtual address to the physical memory space of the data receiving device.

Therefore, in some embodiments of the disclosure, the data transmission device may use RDMA to transmit the data to be transmitted through TSN, which may reduce the delay and bandwidth of data transmission while reducing the CPU of the data initiating device and the data receiving device.

To improve the startup speed of the preset data transmission network, the preset data transmission network may be configured in the data transmission device, so that the preset data transmission network may be started during the startup process of the data transmission device, which may improve the startup of the preset data transmission network time.

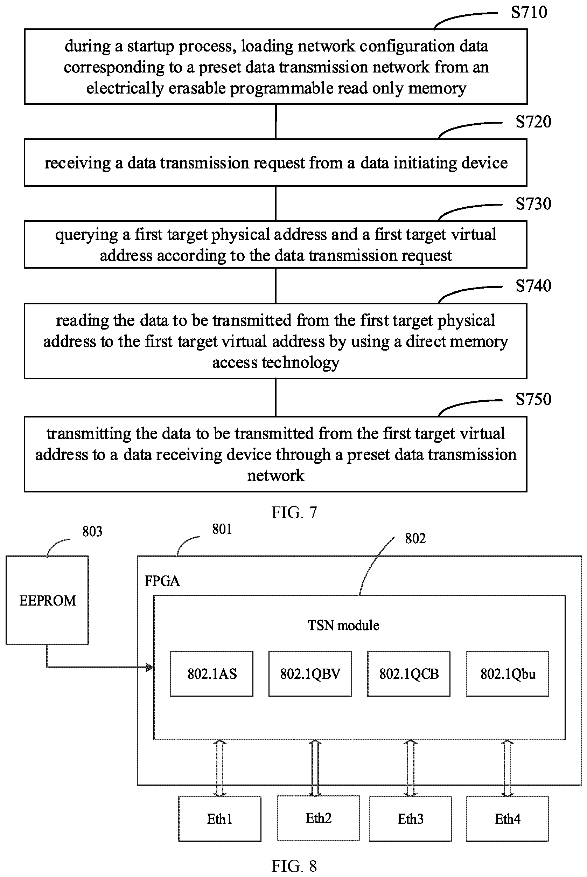

FIG. 7 illustrates a schematic flowchart of another data transmission method provided in some embodiments of the disclosure.

As illustrated in FIG. 7, the data transmission method may include the following steps: S710-S750.

S710, during a startup process, network configuration data corresponding to the preset data transmission network are loaded from an electrically erasable programmable read only memory (EEPROM).

In some embodiments of the disclosure, the startup process may be a boot and power-on process of the data transmission device.

In some embodiments of the disclosure, the data transmission device may be configured with a preset data transmission network module.

In some embodiments of the disclosure, the network configuration data may be parameters for configuring the preset data transmission network.

The preset data transmission network corresponding to the preset data transmission network module may include the TSN.

Correspondingly, S710 may include:
during the startup process, loading network configuration data corresponding to the TSN from an electrically erasable programmable read only memory.

In detail, during the startup process of the data transmission device, the data transmission device may generate a loading request for network configuration data. In response to the loading request, the network configuration data corresponding to the TSN in the preset data transmission network module are loaded from the EEPROM to configure the TSN network. The preset data transmission network module includes the protocol corresponding to the TSN, so that when performing data transmission, the configured TSN may be used according to the protocol corresponding to the preset data transmission network to transmit the data to be transmitted by the data initiating device to the data receiving device.

In some embodiments of the disclosure, the EEPROM may be a read-only memory that programs or erases a storage matrix according to user requirements. EEPROM may store configuration files in advance.

In some embodiments of the disclosure, the configuration file may be a file for storing network parameters of the preset data transmission network.

In some embodiments of the disclosure, the network parameters may be parameters that may independently reflect network characteristics. In some embodiments of the disclosure, the network parameters may include: a name of the preset data transmission network, a media access control address (MAC address), an Internet Protocol address (IP address), a network interface, subnet mask, gateway address, etc., which are not limited herein.

In some embodiments of the disclosure, the protocol corresponding to the TSN may include: 802.1AS protocol, 802.1QBV protocol, 802.1QCB protocol, 802.1Qbu protocol, and the like. Different protocols correspond to different data transmission formats, so that the TSN transmits data according to the format corresponding to the protocol.

S720, a data transmission request from a data initiating device is received.

S730, a first target physical address and a first target virtual address are queried according to the data transmission request.

S740, the data to be transmitted are read from the first target physical address to the first target virtual address by using a direct memory access technology.

S750, the data to be transmitted are transmitted from the first target virtual address to a data receiving device through a preset data transmission network.

S720-S750 are similar to the above-mentioned S610-S640, and details are not described herein.

FIG. 8 illustrates a schematic diagram of a process of starting a data transmission device provided in some embodiments of the disclosure.

As illustrated in FIG. 8, FPGA 801 may be a data transmission device, and a preset data transmission network module is configured in the data transmission device. The preset data transmission network module is TSN module 802. The TSN module includes 802. IAS protocol, 802.1QBV protocol, 802.1QCB protocol, 802.1Qbu protocol, etc. Each protocol corresponds to data formats such as Eth 1, Eth2, Eth3, and Eth4. During the startup process of the data transmission device, the network configuration data corresponding to the TSN are loaded from EEPROM 803 to configure the TSN according to the network configuration data.

Therefore, in some embodiments of the disclosure, since the preset data transmission network module is configured in the FPGA, the FPGA is used to configure the TSN, which may improve the configuration speed of the TSN compared to using ARM-Linux to configure the TSN, and improve the start-up speed of the TSN module greatly, increase the time accuracy during the start-up process of the TSN module, and improve the time synchronization accuracy when the data initiating device and the data receiving device perform time synchronization.

To improve the efficiency of data transmission, in some embodiments of the disclosure, when the preset data transmission network includes the time-sensitive network, the configuration file may also include a priority configuration file, and the priority configuration file may be used to store a priority level identifier corresponding to each priority.

Different priority levels may correspond to different priority codes, and each correspond to a unique priority level identifier.

In detail, after the data transmission network reads the data to be transmitted from the first target physical address to the first target virtual address, it may query the target priority identifier corresponding to the data to be transmitted based on the priority configuration file, and transmit the data to be transmitted from the first target virtual address to the data receiving device according to the corresponding target priority identified by the target priority level and the time of the data to be transmitted.

Therefore, in some embodiments of the disclosure, since the configuration file includes the priority configuration file, the data transmission device may transmit the data to be transmitted from the first target virtual address to the data receiving device through the time-sensitive network according to the target priority transmission and time corresponding to the data to be transmitted, which may improve the transmission efficiency of the data to be transmitted and solve the inaccurate problem of network transmission, thereby reducing the bandwidth and delay of network transmission, and ensuring the real-time transmission performance of the data to be transmitted.

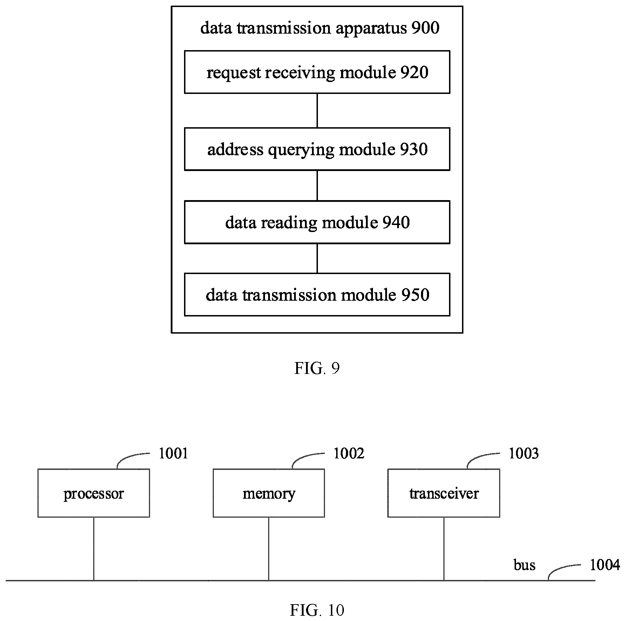

Some embodiments of the disclosure also provide a data transmission apparatus for implementing the above data transmission method, which will be described below with reference to FIG. 9. In some embodiments of the disclosure, the data transmission apparatus may be a data transmission device. The data transmission device may be a device with an FPGA as a core.

FIG. 9 illustrates a schematic bloc diagram of a data transmission apparatus provided in some embodiments of the disclosure.

As illustrated in FIG. 9, it may include a request receiving module 910, an address querying module 920, a data reading module 930, and a data transmission module 940.

The request receiving module 910 is configured to receive a data transmission request from a data initiating device.

The address querying module 920 is configured to query a first target physical address and a first target virtual address according to the data transmission request, in which the first target physical address is a physical address in the data initiating device for storing data to be transmitted and the first target virtual address is a virtual address for buffering the data to be transmitted.

The data reading module 930 is configured to, when a data type of the data to be transmitted is a target data type, read the data to be transmitted from the first target physical address to the first target virtual address by using the direct memory access technology.

The data transmission module 940 is configured to transmit the data to be transmitted from the first target virtual address to a first transmission device through the preset data transmission network, in which the first transmission device is connected to the data receiving device, and the first transmission device is configured to use the direct memory access technology to transmit the data to be transmitted to the data receiving device.

In some embodiments of the disclosure, the first target physical address and the first target virtual address may be queried according to the data transmission request when receiving the data transmission request from the data initiating device. The data to be transmitted stored in the first target physical address in the data initiating device are buffered by using the direct memory access technology to the first target virtual address of the data to be transmitted. The data to be transmitted are transmitted from the first target virtual address to the data receiving device through the preset data transmission network. Therefore, the entire data transmission process from the data initiating device to the data receiving device may be realized without the participation of the CPU of the data initiating device, which may effectively reduce the CPU resource occupation on the data initiating device, thereby reducing the CPU load of the data initiating device, ensuring the reliability of the autonomous vehicle control, and improving the safety of the autonomous vehicle driving.

In some embodiments of the disclosure, the data transmission request carries a device program identifier.

The address querying module 920 may include a first target physical address querying unit and a first target virtual address querying unit.

The first target physical address querying unit may be configured to query the first target physical address corresponding to the device program identifier.

The first target virtual address querying unit may be configured to query the first target virtual address corresponding to the first target physical address according to a first address mapping relationship.

In some embodiments of the disclosure, the data reading module 930 may also be configured to, in a case that a data type of the data to be transmitted is a target data type, read the data to be transmitted from the first target physical address to the first target virtual address by using the direct memory access technology.

The target data type is a data type to which data targeted by the direct memory access technology belong.

In some embodiments of the disclosure, the data transmission module 940 may also be configured to transmit the data to be transmitted from the first target virtual address to a first transmission device through the preset data transmission network, in which the first transmission device is connected to the data receiving device and the first transmission device is configured to transmit the data to be transmitted to the data receiving device by using the direct memory access technology.

In some embodiments of the disclosure, the data transmission module 940 may include a second target virtual address querying unit and a first data transmission unit.

The second target virtual address querying unit may be configured to query a second target virtual address corresponding to the first target virtual address according to a second address mapping relationship, and the second target virtual address is a virtual address in the first transmission device for buffering the data to be transmitted.

The first data transmission unit may be configured to transmit the data to be transmitted from the first target virtual address to the second target virtual address through the preset data transmission network.

The first transmission device is configured to transmit the data to be transmitted from the second target virtual address to a second target physical address corresponding to the second target virtual address by using the direct memory access technology and the second target physical address is a physical address in the data receiving device for storing the data to be transmitted.

In some embodiments of the disclosure, the data transmission module 940 may also be configured to transmit the data to be transmitted from the first target virtual address to a second transmission device through the preset data transmission network, in which the second transmission device is configured to transmit the data to be transmitted to a first transmission device through the preset data transmission network, the first transmission device is connected to the data receiving device, and the first transmission device is configured to transmit the data to be transmitted to the receiving device data by using the direct memory access technology.

In some embodiments of the disclosure, the data transmission module 940 may include a third target virtual address querying unit and a second data transmission unit.

The second target virtual address query unit may be configured to query a third target virtual address corresponding to the first target virtual address according to a third address mapping relationship, and the third target virtual address is a virtual address in the second transmission device for buffering the data to be transmitted.

The second data transmission unit may be configured to transmit the data to be transmitted from the first target virtual address to the third target virtual address through the preset data transmission network.

The second transmission device is configured to transmit the data to be transmitted from the third target virtual address to a second target virtual address corresponding to the third target virtual address through the preset data transmission network, the second target virtual address is a virtual address in the first transmission device for buffering the data to be transmitted, and the first transmission device is configured to transmit the data to be transmitted from the second target virtual address to a second target physical address corresponding to the second target virtual address by using the direct memory access technology, and the second target physical address is a physical address in the data receiving device for storing the data to be transmitted.

In some embodiments of the disclosure, the preset data transmission network includes a time-sensitive network.

In some embodiments of the disclosure, the data transmission module 940 may also be configured to add the data to be transmitted to a transmission queue of the time-sensitive network, in which the transmission queue is configured to determine a first transmission order of the data to be transmitted according to a target transmission priority and a timestamp carried by the data to be transmitted, and transmit the data to be transmitted from the first target virtual address to the data receiving device according to the first transmission order, and the target transmission priority is a transmission priority to which a data type of the data to be transmitted belongs.

In some embodiments of the disclosure, the data transmission module 940 may also be configured to add the data to be transmitted to a transmission queue of the time-sensitive network, in which the data transmission sequence is configured to determine a second transmission order of the data to be transmitted according to a received time stamp carried by the data to be transmitted and transmit the data to be transmitted from the first target virtual address to the data receiving device according to the second transmission order.

In some embodiments of the disclosure, the device further includes a network configuration data loading module.

The network configuration data loading module may be configured to, during a startup process, load network configuration data corresponding to the preset data transmission network from an electrically erasable programmable read only memory.

It should be noted that the data transmission device 900 in FIG. 9 may execute each step in the method embodiment in FIG. 6 and FIG. 7, and realize each process and effects, which will not be described herein.

FIG. 10 illustrates a schematic block diagram of a data transmission device provided in some embodiments of the disclosure.

As illustrated in FIG. 10, the data transmission device may include a processor 1001 and a memory 1002 for storing computer program instructions.

In detail, the above-mentioned processor 1001 may include a central processing unit (CPU), or an application specific integrated circuit (ASIC), or may be configured to implement one or more integrated circuits for implementing the embodiments of the disclosure.

The memory 1002 may include a mass storage for information or instructions. By way of example and not limitation, the memory 1002 may include a hard disk drive (HDD), a floppy disk drive, a flash memory, an optical disk, a magneto-optical disk, a magnetic tape, or a universal serial bus (USB) drive, or a combination of two or more thereof. The memory 1002 may include a removable or non-removable (or fixed) medium where appropriate. The memory 1002 may be internal or external to the integrated gateway device where appropriate. In some embodiments, the memory 1002 is a non-volatile solid-state memory. In some embodiments, the memory 1002 includes a read-only memory (ROM). The ROM may be a mask-programmed ROM, a programmable ROM (PROM), an electrical programmable PROM (EPROM), an electrically erasable PROM (EEPROM), an electrically alterable ROM (EAROM), a flash memory, or a combination of two or more thereof.

The processor 1001 executes the steps of the data transmission method provided in the embodiments of the disclosure by reading and executing the computer program instructions stored in the memory 1002.

For example, the vehicle may also include a transceiver 1003 and a bus 1004. As illustrated in FIG. 10, the processor 1001, the memory 1002, and the transceiver 1003 are connected through the 1004 to complete mutual communication.

The bus 1004 includes hardware, software, or both. By way of example and not limitation, the bus may include an accelerated graphics port (AGP) or other graphics bus, an enhanced industry standard architecture (EISA) bus, a front side bus (FSB), a hyper transport (HT) interconnection, an industrial standard architecture (ISA) bus, an InfiniBand Interconnection, a low pin count (LPC) bus, a memory bus, a micro channel architecture (MCA) bus, a peripheral component interconnect (PCI) bus, a PCI-express (PCI-X) bus, a serial advanced technology attachment (SATA) bus, a video electronics standards association local bus (VLB), or other suitable bus, or a combination of two or more thereof. The bus 1004 may include one or more buses, where appropriate. Although embodiments of the disclosure describe and illustrate a particular bus, this disclosure contemplates any suitable bus or interconnect.

Some embodiments of the disclosure also provide a storage medium including instructions, for example, the memory 1002 including the instructions. The above instructions may be executed by the processor 1002 of the computing device to complete the data transmission method provided in some embodiments of the disclosure. In some embodiments of the disclosure, the storage medium may be a non-transitory computer-readable storage medium, for example, the non-transitory computer-readable storage medium may be a ROM, a random access memory (RAM), a compact disc ROM (CD-ROM), a magnetic tape, a floppy disk, an optical data storage device, etc.

Some embodiments of the disclosure also provide a computer program product. The computer program product includes a computer program, and when the computer program is executed by a processor, the data transmission method provided in some embodiments of the disclosure is implemented.

Some embodiments of the disclosure also provide a computer program. The computer program includes a computer program code. When the computer program code runs on the computer, the computer is caused to execute the data transmission method provided in some embodiments of the disclosure.

It should be noted that the foregoing explanations of the embodiments of the data transmission method are also applicable to the data transmission apparatus, the data transmission device, the computer-readable storage medium, the computer program product, and the computer program of the embodiments of the disclosure, and details are not repeated herein.

It should be noted that in this article, relative terms such as "first" and "second" are only used to distinguish one entity or operation from another entity or operation, and do not necessarily require or imply these entities or operations have the actual relationship or order. Moreover, the term "includes" is intended to cover a non-exclusive inclusion such that a process, a method, an article, or an apparatus including a set of elements includes not only those elements but also other elements not expressly listed, or elements inherent in the process, the method, the article, or the apparatus.

The above are only specific implementation manners of the disclosure, so that those skilled in the art may understand or implement the disclosure. Various modifications to these embodiments will be readily apparent to those skilled in the art, and the general principles defined herein may be implemented in other embodiments without departing from the spirit or scope of the disclosure. Therefore, the disclosure will not be limited to the embodiments described herein, but is to be accorded the widest scope consistent with the principles and novel features disclosed herein.

## Claims

1. A data transmission method, comprising:
receiving a data transmission request from a data initiating device;
querying a first target physical address and a first target virtual address according to the data transmission request, wherein the first target physical address is a physical address in the data initiating device for storing data to be transmitted and the first target virtual address is a virtual address for buffering the data to be transmitted;
reading the data to be transmitted from the first target physical address to the first target virtual address by using a direct memory access technology; and
transmitting the data to be transmitted from the first target virtual address to a data receiving device through a preset data transmission network.

2. The method according to claim 1, wherein the data transmission request carries a device program identifier; and
querying the first target physical address and the first target virtual address according to the data transmission request comprises:
querying the first target physical address corresponding to the device program identifier; and
querying the first target virtual address corresponding to the first target physical address according to a first address mapping relationship.

3. The method according to claim 1 or 2, wherein reading the data to be transmitted from the first target physical address to the first target virtual address by using the direct memory access technology comprises:
in a case that a data type of the data to be transmitted is a target data type, reading the data to be transmitted from the first target physical address to the first target virtual address by using the direct memory access technology;
wherein the target data type is a data type to which data targeted by the direct memory access technology belong.

4. The method according to any one of claims 1 to 3, wherein transmitting the data to be transmitted from the first target virtual address to the data receiving device through the preset data transmission network comprises:
transmitting the data to be transmitted from the first target virtual address to a first transmission device through the preset data transmission network, wherein the first transmission device is connected to the data receiving device and the first transmission device is configured to transmit the data to be transmitted to the data receiving device by using the direct memory access technology.

5. The method according to claim 4, wherein transmitting the data to be transmitted from the first target virtual address to the first transmission device through the preset data transmission network comprises:
querying a second target virtual address corresponding to the first target virtual address according to a second address mapping relationship, wherein the second target virtual address is a virtual address in the first transmission device for buffering the data to be transmitted; and
transmitting the data to be transmitted from the first target virtual address to the second target virtual address through the preset data transmission network;
wherein the first transmission device is configured to transmit the data to be transmitted from the second target virtual address to a second target physical address corresponding to the second target virtual address by using the direct memory access technology and the second target physical address is a physical address in the data receiving device for storing the data to be transmitted.

6. The method according to any one of claims 1 to 3, wherein transmitting the data to be transmitted from the first target virtual address to the data receiving device through the preset data transmission network comprises:
transmitting the data to be transmitted from the first target virtual address to a second transmission device through the preset data transmission network, wherein the second transmission device is configured to transmit the data to be transmitted to a first transmission device through the preset data transmission network, the first transmission device is connected to the data receiving device, and the first transmission device is configured to transmit the data to be transmitted to the data receiving device by using the direct memory access technology.

7. The method according to claim 6, wherein transmitting the data to be transmitted from the first target virtual address to the second transmission device through the preset data transmission network comprises:
querying a third target virtual address corresponding to the first target virtual address according to a third address mapping relationship, wherein the third target virtual address is a virtual address in the second transmission device for buffering the data to be transmitted; and
transmitting the data to be transmitted from the first target virtual address to the third target virtual address through the preset data transmission network;
wherein the second transmission device is configured to transmit the data to be transmitted from the third target virtual address to a second target virtual address corresponding to the third target virtual address through the preset data transmission network, the second target virtual address is a virtual address in the first transmission device for buffering the data to be transmitted, and the first transmission device is configured to transmit the data to be transmitted from the second target virtual address to a second target physical address corresponding to the second target virtual address by using the direct memory access technology, and the second target physical address is a physical address in the data receiving device for storing the data to be transmitted.

8. The method according to any one of claims 1-7, wherein the preset data transmission network comprises a time-sensitive network.

9. The method according to claim 8, wherein transmitting the data to be transmitted from the first target virtual address to the data receiving device through the preset data transmission network comprises:
adding the data to be transmitted to a transmission queue of the time-sensitive network, wherein the transmission queue is configured to determine a first transmission order of the data to be transmitted according to a target transmission priority and a timestamp carried by the data to be transmitted and transmit the data to be transmitted from the first target virtual address to the data receiving device according to the first transmission order, and the target transmission priority is a transmission priority to which a data type of the data to be transmitted belongs.

10. The method according to claim 8, wherein transmitting the data to be transmitted from the first target virtual address to the data receiving device through the preset data transmission network comprises:
adding the data to be transmitted to a transmission queue of the time-sensitive network, wherein the data transmission sequence is configured to determine a second transmission order of the data to be transmitted according to a received time stamp carried by the data to be transmitted and transmit the data to be transmitted from the first target virtual address to the data receiving device according to the second transmission order.

11. The method according to any one of claims 1 to 10, before receiving the data transmission request from the data initiating device, further comprising:
during a startup process, loading network configuration data corresponding to the preset data transmission network from an electrically erasable programmable read only memory.

12. A data transmission apparatus, comprising:
a request receiving module configured to receive a data transmission request from a data initiating device;
an address querying module configured to query a first target physical address and a first target virtual address according to the data transmission request, wherein the first target physical address is a physical address in the data initiating device for storing data to be transmitted and the first target virtual address is a virtual address for buffering the data to be transmitted;
a data reading module configured to read the data to be transmitted from the first target physical address to the first target virtual address by using a direct memory access technology; and
a data transmission module configured to transmit the data to be transmitted from the first target virtual address to a data receiving device through a preset data transmission network.

13. A data transmission device, comprising:
one or more processors; and
a storage means for storing one or more programs,
wherein when the one or more programs are executed by the one or more processors, the one or more processors perform the data transmission method according to any one of claims 1 to 11.

14. A computer-readable storage medium having stored therein a computer program, wherein when the computer program is executed by a processor, the data transmission method according to any one of claims 1 to 11 is implemented.

15. A computer program product, comprising a computer program, wherein when the computer program is executed by a processor, the data transmission method according to any one of claims 1 to 11 is implemented.

16. A computer program, comprising a computer program code, wherein when the computer program code is running on a computer, the computer is caused to perform the data transmission method according to any one of claims 1 to 11.
